# DEMANDE DE BREVET EUROPEEN

(11) **EP 3 760 041 A1**
(43) Date de publication de la demande: **06.01.2021**
(21) Numéro de dépôt: 20183781.2
(22) Date de dépôt: 02.07.2020
(51) Int. Cl.: A01K 61/54, A01K 61/55

(54) **DISPOSITIF DE CROISSANCE DE COQUILLAGE OPTIMISÉ**

(30) Priorité: 03.07.2019 FR 1907368
(71) Demandeur: Le Borgne, Yves, 29870 Landeda (FR); Daval, Cyrille, 29870 Lannilis (FR)
(72) Inventeur: Le Borgne, Yves, 29870 Landeda (FR); Daval, Cyrille, 29870 Lannilis (FR)
(74) Mandataire: Lawrence, James

(57) **Abrégé**

L'objet de la présente invention concerne un dispositif de fixation et de positionnement d'au moins un support de croissance (SC) de coquillages, pouvant prendre la forme d'un arceau (AR), d'une table (TO) comprenant un tel dispositif, ainsi qu'un procédé de culture de coquillages permettant une augmentation du rendement de production de coquillages.

## Description

L'objet de la présente invention concerne un dispositif de fixation et de positionnement d'au moins un support de croissance de coquillages, pouvant prendre la forme d'un arceau, d'une table comprenant un tel dispositif, ainsi qu'un procédé de culture de coquillages permettant une augmentation du rendement de production de coquillages.

Pour être commercialisables, en particulier dans les pays où elles sont consommées vivantes dans leurs coquilles, les fruits de mers en coquilles, telles que les huitres, obtenus en production doivent présenter des caractéristiques morphologiques extérieures irréprochables. Le consommateur attend en effet à ce que la forme de la coquille soit généralement ronde, voire oblongue avec une pointe plus effilée d'un côté, plus ou moins creuse et que chaque coquillage soit isolé des autres. Or, les coquillages, telles que les huitres ont une tendance naturelle à adapter la forme de leur coquille à leur environnement, et à s'accoler les unes aux autres.

Ainsi, l'une des techniques traditionnelles de culture de coquillages implique des enceintes (telle que des poches ostréicoles) où les coquillages sont regroupés et laissés pour croitre. Ces enceintes peuvent simplement être positionnées sur des tables elles-mêmes placées typiquement dans des zones découvrantes exposées du littoral à la force des vagues permettant ainsi un brassage régulier des enceintes. De plus, sur certains sites, la force des vagues permet un tel roulement dans les enceintes lors des marées, que lorsqu'elles émergent dans les vagues, les vagues permettent de briser en partie la croissance coquillière journalière et d'obliger l'animal à favoriser une croissance de la coquille en épaisseur, plus lente, aidant à promouvoir une forme creuse et arrondie des coquilles. Toutefois, de manière générale, une manutention régulière supplémentaire est nécessaire pour retourner chaque enceinte afin de s'assurer que les coquillages ne s'agglomèrent pas d'une manière inacceptable entre elles ou contre les parois de l'enceinte.

Afin d'éviter de telles agglomérations et permettre une meilleure circulation de l'eau au sein, en particulier, de poches ostréicoles, des écarteurs de poche ont été développées. EP1736048, FR2972899 ou encore FR3003437 décrivent de tels écarteurs. Même si ces écarteurs augmentent le volume de la poche et donnent donc en théorie aux coquillages (ici des huitres) une plus grande liberté de mouvement, d'un point de vue pratique, les coquillages ont toujours tendance à s'agglomérer.

Afin d'améliorer la production de coquillages, des dispositifs de culture utilisant des flotteurs (GB2170083, FR3054952) ont été mis au point. Toutefois ces dispositifs nécessitent toujours le retournement des enceintes. GB2170083 implique une partie totalement rotative qui s'adapte mal en milieu corrosif marin et qui empêche, à terme, le bon fonctionnement du dispositif. FR3054952 implique le retournement manuel des enceintes en pleine mer, ce qui d'un point de vue pratique n'est pas adapté à utilisation facile en hiver.

Dans FR2996410 est décrit un dispositif perfectionné de paniers perméables à l'eau articulés les uns aux autres. Toutefois, d'un point de vue pratique, la corrosion et/ou la force de la marée empêche le bon fonctionnement d'un tel dispositif.

Par contraste, l'objet de la présente invention vise à fournir un système robuste de fixation et de positionnement d'au moins un support de croissance de coquillages, telle qu'une poche ostréicole, permettant d'augmenter les rendements de production de coquillages commercialisables. Pour ce faire, la Demanderesse a découvert qu'un flux d'eau turbulent (par exemple turbulent lisse ou rugueux) ou de transition permet de diminuer l'agglomération des coquillages et d'augmenter les rendements. La mise en place d'un dispositif robuste pour produire un tel flux a été développé. En outre, ce dispositif peut comprendre ou être placé sur une table ostréicole afin de permettre un retournement manuel des supports de croissance, permettant de cumuler les moyens pour éviter l'agglomération des coquillages. Le dispositif de la présente invention a de plus l'avantage de pouvoir offrir un moyen d'écartement de l'enceinte de croissance sans être placé à l'intérieur de ladite enceinte.

### RESUME DE L'INVENTION

L'objet de la présente invention concerne un dispositif de fixation et de positionnement, préférentiellement pour le milieu extérieur, d'au moins un support de croissance (SC) de coquillages post-nurserie, par exemple un support de croissance ostréicole, caractérisé en ce que :
- - ledit dispositif est configuré de manière à ce qu'une majorité desdits coquillages subit un flux d'eau turbulent ou de transition, préférentiellement un flux d'eau turbulent lisse ou rugueux, et/ou
- ledit dispositif est configuré de manière à ce que le support de croissance comprend un point bas (A) arrangé de manière à faire face au courant, un point haut fuyant (B) et un volume utile de croissance (VUC) à l'aval du point bas (A).

L'objet de la présente invention concerne un dispositif de fixation et de positionnement d'au moins un support souple et creux de croissance de coquillages, caractérisé en ce que ledit dispositif comprend un moyen d'ouverture attaché d'une part à une surface extérieure dudit support creux et souple et attaché d'autre part à un point d'ancrage extérieur fixe par rapport audit dispositif, optionnellement ledit dispositif est configuré de manière à ce que ledit support de croissance subit un flux d'eau turbulent (par exemple turbulent lisse ou rugueux) ou de transition tel que défini présentement. Ainsi le moyen d'ouverture permet d'augmenter et de maintenir le volume utile de croissance. Une expression synonyme de « moyen d'ouverture » dans le contexte de la présente invention pourrait être : un « moyen du déploiement du volume utile de croissance », le cas échéant. De manière préférée, le moyen d'ouverture décrit ci-dessus peut permettre d'ouvrir le support creux et souple d'un volume supérieur ou égal à 5%, préférentiellement supérieur ou égal à 10%, 15%, 20%, 25%, ou encore supérieur ou égal à 30%, du volume total potentiel du support creux et souple.

L'objet de la présente invention concerne de plus une table ostréicole configurée pour comprendre un dispositif selon la présente invention, tel qu'un arceau attaché à ladite table par soudure ou par un lien élastomère, telle qu'une bande de caoutchouc enroulée autour des parties en contact les unes avec les autres de la table et de l'arceau.

L'objet de la présente invention concerne en outre un arceau adapté pour un dispositif selon la présente invention ou une table ostréicole selon la présente invention.

L'objet de la présente invention concerne ainsi un procédé de culture de coquillages comprenant un dispositif selon la présente invention et/ou une table ostréicole selon la présente invention, ledit dispositif et/ou ladite table ostréicole étant orientés dans un milieu naturel de manière à générer un flux d'eau turbulent (par exemple lisse ou rugueux) ou de transition.

L'objet de la présente invention concerne donc l'utilisation d'un dispositif selon la présente invention, une table ostréicole selon la présente invention et/ou un arceau selon la présente invention pour une culture de coquillages.

### DEFINITIONS

Par « dispositif de fixation et de positionnement » selon la présente invention, il est compris un dispositif permettant d'attacher (« fixation ») un support de croissance et de le maintenir dans une configuration voulue (« positionnement »), avec par exemple un angle d'inclinaison souhaité.

Par « support de croissance de coquillages » selon la présente invention, il est compris tout support sur ou dans lequel des coquillages peuvent être insérés ou fixés de manières à ce que lesdits coquillages puissent croître. Les supports de croissance de coquillages selon la présente invention peuvent être pleines (les coquillages peuvent alors être fixés à la surface de ces supports) ou creuses (les coquillages peuvent alors être fixés ou librement placés à l'intérieur des supports de croissance). Il peut par exemple s'agir de poches ostréicoles dites « soudées », de poches ostréicoles dites « berlingo », de casiers, de poches plates et/ou conformées. De manière préférée il s'agit de poches ostréicoles dites soudées, et/ou de poches ostréicoles dites « berlingo ».

Par « point haut fuyant (B) », il est compris dans le contexte de la présente invention un point haut (B) à l'aval du point bas (A). Le terme « aval » est en référence au sens du courant, en particulier le courant dominant du lieu d'exploitation, auquel est soumis le dispositif selon la présente invention.

Par poche ostréicole dite « soudée », il est compris dans le contexte de la présente invention une poche ostréicole plate ou conformée fermée à au moins l'une de ces extrémités par une soudure par exemple de type polymérique, tel qu'un plastique, sous la forme par exemple d'une baguette pinçant au moins une extrémité d'une paroi de la poche contre l'autre extrémité d'une autre paroi de la poche. Une poche soudée peut être une poche plate, conformée, ou encore dite « berlingo ».

Par poche ostréicole plate, il est compris dans le contexte de la présente invention une poche ostréicole dont le/les matériaux la constituant ne présentent aucune mémoire de forme particulière, ce qui résulte typiquement en ce que les deux parois opposées de la poche se placent intégralement l'une contre l'autre par effet de gravitée.

Par poche ostréicole dite « conformée », il est compris dans le contexte de la présente invention une poche ostréicole dont le/les matériaux la constituant présentent une mémoire de forme particulière. Ces matériaux sont typiquement relativement souples, mais laissés sans contrainte prennent une forme définie.

Par poche ostréicole dite « berlingo », il est compris dans le contexte de la présente invention une poche présentant un aspect général de rectangle parallélépipède. Ainsi, préférentiellement une poche ostréicole dite « berlingo », est également une poche dite conformée telle que définie ci-dessus, présentant une mémoire de forme en rectangle parallélépipède.

Par « casier », il est compris dans le contexte de la présente invention une enceinte de culture creuse intégrant au moins un élément structural rigide, préférentiellement toutes les faces de l'enceinte comprennent au moins un élément rigide, permettant de définir un espace interne de culture/croissance des coquillages ne variant pas ou peu dans les conditions usuelles de culture.

De manière avantageuse, les supports de croissance selon la présente invention sont poreux, avec des diamètres d'ouverture de pores compris entre 2 et 20 mm, préférentiellement compris entre 3 et 10 mm, plus préférentiellement compris entre 4 et 7 mm, par exemple 3 +/- 0,5mm, 4 +/- 0,5mm, 5 +/- 0,5mm, 6 +/- 0,5mm, 7 +/- 0,5mm, 8 +/- 0,5mm, 9 +/- 0,5mm, 10 +/- 0,5mm. Par «diamètre d'ouverture de pores », il est compris dans le contexte de la présente invention l'ouverture minimale du port, c'est-à-dire la plus petite distance d'ouverture bloquant le passage d'un objet.

Le terme « +/- » représente l'expression « plus ou moins » dans l'ensemble du présent document.

De manière avantageuse, les supports de croissance selon la présente invention présentent sur au moins une partie de l'une, plusieurs ou toutes leurs parois, une distribution régulière de pores, par exemple sous la forme d'un maillage dont l'ouverture des pores est telle que définie ci-dessus.

De manière avantageuse, les supports de croissance de coquillages selon la présente invention sont de forme générale plane, par exemple polygonale, avec préférentiellement une épaisseur variable d'un côté à un autre de manière à pouvoir insérer les coquillages dans une enceinte comprise dans le support de croissance. Dans un mode de réalisation particulier, les supports de croissance selon la présente invention présentent au moins une surface pleine ou poreuse permettant de générer des altérations du courant environnant. Par exemple, les supports de croissance de coquillages selon la présente invention peuvent être des poches ostréicoles. Il a été constaté que les poches ostréicoles classiquement utilisées en post-nurserie jusqu'à la récolte définitive des coquillages, présentaient une porosité adéquate pour laisser passer suffisamment d'eau à l'intérieur desdites poches tout en générant des phénomènes de mécanique des fluides telles que découvertes dans le cadre de la présente invention.

Par « support de croissance ostréicole » selon la présente invention, il est compris un support de croissance de coquillages tel que ceux décrits ci-dessus appliqués à la croissance d'huitres, telles que des poches ostréicoles telles que décrites ci-dessus.

Par « flux d'eau turbulent ou de transition » selon la présente invention, il est compris un flux d'eau en régime turbulent ou régime de transition (régime transitoire est un synonyme de régime de transition). Ce vocabulaire qui est plus classiquement utilisé dans le domaine de l'aéronautique pour décrire les mouvements d'air par exemple autour des ailes d'avions, est applicable à la présente invention pour les mouvements d'eau autour des supports de croissance des coquillages. En produisant des flux d'eau turbulent ou de transition, les coquillages puisent mieux les ressources nécessaires à leur croissance (oxygène, nutriments) dans leur milieu et moins susceptibles de s'agglomérer, permettant ainsi d'augmenter les rendements de production. Un régime (ou flux) laminaire correspond classiquement à l'écoulement d'un fluide dans lequel l'ensemble du fluide en mouvement s'écoule sans que les différences locales se contrarient. Un régime (ou flux) turbulent correspond classiquement à un état d'écoulement d'un fluide où les filets de fluides constituants celui-ci s'enchevêtrent et s'enroulent sur eux-mêmes. Le régime (ou flux) de transition correspond classiquement à l'écoulement d'un fluide ne pouvant pas être strictement classé comme laminaire ou turbulent, mais présentant des caractéristiques de chacun de ces deux régimes (ou flux). Des études plus fines ont montré qu'il existe encore une subdivision entre les écoulements turbulents lisses et les écoulements turbulents rugueux.

Même si la limite entre tous ces différents types d'écoulement peut être difficile à appréhender, en utilisant divers fluides de viscosité différentes, en faisant varier le débit et le diamètre d'une canalisation, Reynolds a montré que le paramètre qui permettait de déterminer si l'écoulement est laminaire ou turbulent est un nombre sans dimension appelé nombre de Reynolds donné par l'expression "Re = (V x d)/ v" où "Rₑ" est le nombre de Reynolds, "V" est la vitesse moyenne d'écoulement à travers la section considérée en (m/s), "d" est le diamètre de la conduite ou largeur de la veine fluide en (m) et "v" est la viscosité cinématique du fluide en (m²/s). Classiquement à titre indicatif :
- si "Rₑ" est inférieur à environ 2000, l'écoulement peut être considéré comme laminaire,
- si "Rₑ" est supérieur à environ 2000 et inférieur à environ 3000, l'écoulement peut être considéré comme régime de transition,
- si "Rₑ" est supérieur à environ 3000 et inférieur à environ 100000, l'écoulement peut être considéré comme régime turbulent lisse, et
- si "Rₑ" est supérieur à environ 100000, l'écoulement peut être considéré comme régime turbulent rugueux.

En pratique le régime d'écoulement peut être approximativement déterminé par l'utilisation de colorant(s) pour visualiser les filets de fluides s'enchevêtrant et s'enroulant sur eux-mêmes.

Par « arceau » selon la présente invention, il est compris un objet en forme de petite arche, pouvant être fixée ou intégrée dans une table ostréicole. Ledit arceau est classiquement fixé ou intégré dans la table ostréicole de manière à ce que la partie voutée de l'arceau est placée au-dessus du plan horizontal de la table ostréicole. L'arceau (ainsi que la partie voutée de celui-ci) peut avoir une forme générale arrondie ou polygonale. L'arceau peut être en tout matériau ou combinaison de matériaux adaptés à l'environnement de culture de coquillages, tel que l'acier ou des matières polymères, tels que des plastiques comme le PVC.

Par « soudure(s) » selon la présente invention, il est généralement compris au moins deux pièces assemblées en un tout continu, ladite soudure étant généralement obtenue en chauffant ces deux pièces ou en appliquant un produit de soudure par exemple à chaud, tel qu'un métal, un alliage de métaux, des polymères de soudure pour les soudures de pièces en polymère ou encore une colle de soudure à froid pour métaux et/ou polymères.

Par « lien élastomère » selon la présente invention, il est compris un moyen de fixation typiquement moins rigide qu'une soudure (« lien ») par l'utilisation d'un polymère présentant des propriétés élastiques (« élastomère »), tel que le caoutchouc.

### DESCRIPTION DETAILLEE

### Dispositif

L'objet de la présente invention concerne donc un dispositif permettant d'augmenter les rendements de production de coquillages commercialisables tel que décrit ci-dessus.

De manière préférée, l'objet de la présente invention concerne un tel dispositif caractérisé en ce que ledit dispositif de fixation et de positionnement est statique. Le fait que ce dispositif soit statique permet à celui-ci d'afficher une robustesse quant aux conditions soumises. Ainsi, de manière avantageuse, le dispositif selon la présente invention peut être caractérisé en ce qu'il comprend des éléments robustes/résistants aux conditions d'utilisation de tels dispositifs, par exemple une partie métallique et/ou une partie en polymère(s) organique(s) adaptés au milieu marin, tel que du PVC. Par exemple, ledit dispositif peut comprendre une section de support horizontal fixe. Ledit dispositif peut ainsi comprendre un arceau, lui-même comprenant une section de support horizontal fixe. L'objet de la présente invention concerne un tel dispositif caractérisé en ce que ledit dispositif de fixation et de positionnement est statique, tel qu'un support horizontal et/ou un arceau comprenant une section de support horizontal fixe. De manière avantageuse, le dispositif selon la présente invention peut être caractérisé en ce qu'il comprend un support horizontal et/ou un arceau en un matériau robuste/résistants aux conditions d'utilisation de tels dispositifs comme matériau métallique (c'est-à-dire comprenant du métal) et/ou comprenant au moins un polymère organique adapté au milieu marin, tel que du PVC.

De manière avantageuse, l'objet de la présente invention concerne ainsi le dispositif décrit ici, caractérisé en ce que ledit dispositif de fixation et de positionnement est adapté pour un usage extérieur. Ainsi, le flux turbulent (par exemple turbulent lisse ou rugueux) ou de transition autour dudit support de croissance de coquillages est généré avantageusement par un mouvement naturel de l'eau, tel qu'un mouvement induit par la marée et/ou un mouvement induit par les écoulements d'eau dans un estuaire.

Le dispositif selon la présente invention peut être caractérisé en ce qu'il est configuré pour que le support de croissance (par exemple ostréicole) est statique ou mobile, préférentiellement mobile selon au moins un axe de rotation, c'est-à-dire que le dispositif est configuré pour que le support de croissance a un mode de positionnement statique et/ou un mode de positionnement mobile, préférentiellement mobile selon au moins un axe de rotation.

Le dispositif selon la présente invention peut être caractérisé en ce que ledit dispositif est configuré pour que le support de croissance a un mode de fonctionnement statique et/ou un mode de fonctionnement mobile dans lequel les mouvements des supports de croissance n'excèdent pas 20% de la plus grand taille rectiligne du plan médian du support de croissance.

De manière préférée, le support de croissance est mobile selon au moins un axe de rotation. De manière avantageuse, le moyen de rotation est assuré par le support de croissance : par exemple celui-ci peut comprendre au moins un fourreau dans lequel est inséré au moins un tube permettant la rotation. Par exemple, le dispositif selon la présente invention peut être configuré pour que le support de croissance est attaché de manière à ce que le plan médian de celui-ci a un angle d'inclinaison par rapport au flux d'eau (pouvant donc être sensiblement équivalent à l'horizontal), compris entre 0 et 30°, préférentiellement entre 10 et 20° et pouvant optionnellement varier dans ces gammes. De manière plus précise, l'angle d'inclinaison est compris entre 1 et 28°, entre 10 et 27°, préférentiellement entre 15 et 25°, tel que 15° +/- 1°, 16° +/- 1°, 17° +/- 1°, 18° +/- 1°, 19° +/- 1°, 20° +/- 1°, 21° +/- 1°, 22° +/- 1°, 23° +/- 1°, 24° +/- 1°, ou encore 25° +/- 1° par rapport au flux d'eau (pouvant donc être sensiblement équivalent à l'horizontal).

Dans un mode de réalisation particulier, le dispositif selon la présente invention peut être configuré pour que le support de croissance est attaché de manière à ce que le plan médian de celui-ci a un angle d'inclinaison par rapport au flux d'eau (pouvant donc être sensiblement équivalent à l'horizontal) supérieur à 0°, par exemple supérieur à 0° et inférieur ou égal à 30°, préférentiellement compris entre 10 et 20° et pouvant optionnellement varier dans ces gammes. De manière plus précise, l'angle d'inclinaison est compris entre 1 et 28°, entre 10 et 27°, préférentiellement entre 15 et 25°, tel que 15° +/- 1°, 16° +/- 1°, 17° +/- 1°, 18° +/- 1°, 19° +/- 1°, 20° +/- 1°, 21° +/- 1°, 22° +/- 1°, 23° +/-1°, 24° +/- 1°, ou encore 25° +/- 1 ° par rapport au flux d'eau (pouvant donc être sensiblement équivalent à l'horizontal).

Ainsi, le dispositif selon la présente invention peut être caractérisé en ce que ledit dispositif est relié au sol par un support fixe.

De plus, le dispositif selon la présente invention peut être caractérisé en ce que ledit dispositif a une densité supérieure ou égale à 1.

En outre, le dispositif selon la présente invention peut être caractérisé en ce qu'il ne comprend pas de flotteur. Par « flotteur » il est compris dans le contexte de la présente invention un objet ayant une densité inférieur à 1 lui permettant de flotter lorsqu'il est dans l'eau.

Dans le contexte de la présente invention, il est compris par « angle d'inclinaison par rapport à un flux d'eau », l'angle sur le plan vertical pris entre un tracé moyen linéaire correspondant au mouvement d'eau (généralement proche de l'horizontal dans les mouvements de marée) et le plan médian du support de croissance. En effet, en positionnant le dispositif de manière à ce que le support de croissance obstrue le passage de l'eau, cette dernière génère des courants permettant une meilleure oxygénation des coquillages (telles que des huitres), tout en générant potentiellement des turbulences empêchant les coquillages de s'agglomérer. Ceci est surprenant car les enceintes de croissance étant creuses et typiquement largement perméables, rien n'aurait pu laisser penser que leur positionnement particulier puisse générer un tel résultat au niveau des rendements de culture.

Il est compris dans le contexte de la présente invention que « horizontal » est, localement, le plan perpendiculaire par rapport à l'axe définit par la gravité sur Terre (c'est-à-dire la verticale). Typiquement, le plan horizontal est confondu avec le plan de la surface d'un liquide fluide, tel que la mer ou un lac.

L'objet de la présente invention concerne également un dispositif tel que décrit ci-dessus, caractérisé en ce que ledit dispositif comprend en outre une position de repos dans lequel le support de croissance est placé de manière à ce que le flux d'eau n'est pas turbulent (par exemple turbulent lisse ou rugueux) ou de transition, par exemple le support de coquillages est attaché de manière à ce que le plan médian de celui-ci est horizontal, ou proche de l'horizontal. Une telle option est intéressante en particulier lorsque les conditions environnementales (force des vagues, de la marée, des mouvements d'eau dans les estuaires) risquent d'endommager le dispositif, ou d'emporter les supports de croissance. De plus, une telle option permet de mettre en œuvre des protocoles de croissance avec des variations d'oxygénation des coquillages.

L'objet de la présente invention concerne également un dispositif tel que décrit ci-dessus, caractérisé en ce que le support de croissance est creux.

Par « creux », il est compris dans le contexte de la présente invention que le support de croissance comprend une cavité configurée pour accueillir des coquillages, telles que des huitres. Un exemple de tels supports de croissance creux sont les poches ostréicoles.

De manière préférée, le dispositif tel que décrit présentement est maintenu en position ouverte par un moyen d'ouverture. Par « position ouverte », il est compris dans le contexte de la présente invention que la cavité est maintenue dans une forme générant préférentiellement le plus grand volume possible. Ainsi par « position ouverte », il est compris que la cavité est maintenue ouverte au minimum à 5% de son volume maximal, préférentiellement au minimum 10%, 15%, 20%, 25%, 30%, 35% ou 50% de son volume maximal. Par exemple au niveau ostréicole, l'art antérieur utilise typiquement des moyens insérés dans les poches ostréicoles, tel que des écarteurs, pour augmenter le volume de la cavité. Or, ce type d'écarteur occupe une portion du volume de la cavité, ce qui limite le volume utile de croissance et gène la croissance des coquillages (parce qu'il y a une tendance naturelle des coquillages à adapter leur morphologie à leur environnement physique direct, une partie de la production comprend des coquillages avec une morphologie non voulue due à la présence de ces écarteurs). La présente invention évite ces problèmes techniques et permet une augmentation du rendement de culture. En effet, en utilisant un point d'ancrage extérieur au support de croissance creux, la cavité est libérée de toute présence néfaste à la croissance des coquillages et évite le travail supplémentaire lié par exemple aux écarteurs internes qui nécessitent l'ouverture de la poche et/ou une manutention supplémentaire.

Ainsi, un objet de la présente invention peut concerner également un dispositif de fixation et de positionnement d'au moins un support souple et creux de croissance de coquillages (subissant ou non un flux d'eau turbulent par exemple turbulent lisse ou turbulent rugueux, ou de transition), par exemple un support de croissance ostréicole (telle qu'une poche ostréicole), caractérisé en ce que ledit dispositif comprend un moyen d'ouverture, par exemple comprenant une section élastique, attaché d'une part à une surface extérieure dudit support creux et souple de croissance et attaché d'autre part à un point d'ancrage extérieur fixe (tel qu'un arceau) par rapport audit dispositif. De manière préférée, au moins un point d'ancrage est placé au-dessus du support de croissance, ce qui l'évite de se retourner par les mouvements d'eau.

L'un des intérêts d'un système extérieur d'ouverture d'un support souple et creux de croissance selon la présente invention est la possibilité que cela offre d'utiliser des matériaux très robustes, alors que les écarteurs internes aux supports (selon l'art antérieur) sont limités par leur volume occupé. De manière avantageuse, le moyen d'ouverture extérieur du support de croissance creux et souple comprend une section élastique. Ceci permet de garder une tension continue appliquée au support de croissance creux et souple. Par exemple, le moyen d'ouverture peut comprendre ou consister en un tendeur élastique avec des moyens d'accroché (par exemple des crochets) aux extrémités. Un avantage supplémentaire lié au fait que le moyen d'ouverture soit extérieur au support de croissance est donc la facilité de remplacement (si besoin) dudit moyen d'ouverture. Le dispositif selon la présente invention permet donc de proposer des variantes plus ou moins robustes, selon la dureté des conditions environnemental où le dispositif est installé, nécessitant ainsi une maintenance maîtrisée.

Un mode de réalisation selon la présente invention concerne également un dispositif tel que décrit ci-dessus, caractérisé en ce que le point d'ancrage extérieur fixe est un support horizontal et/ou un arceau supplémentaire tel que décrit ci-dessus. L'arceau peut avoir ainsi pour seul rôle d'être ce point d'ancrage, ou également être attaché à un support de croissance (pouvant être souple et/ou creux) supplémentaire pour permettre de faire subir à ce support un flux d'eau turbulent (par exemple turbulent lisse ou rugueux) ou de transition.

En outre, le dispositif selon la présente invention peut être applicable de manière générale au domaine conchylicole et donc à la conchyliculture. En effet la « conchyliculture » concerne l'ensemble des procédés et des techniques utilisés pour favoriser la production de coquillages (huitres, moules, coquilles Saint Jacques, Ormeaux, etc.).

De manière préférée, le dispositif selon la présente invention est spécifiquement à usage ostréicole (culture d'huitres). Il pourra alors y être référé comme « dispositif ostréicole ». De manière préférée, le dispositif selon la présente invention peut être caractérisé en ce que ledit dispositif comprend au moins une table ostréicole. De manière préférée, le dispositif selon la présente invention peut être caractérisé en ce que ledit dispositif comprend au moins une table ostréicole à laquelle est reliée au moins un arceau permettant d'attacher un support de croissance ostréicole (telle qu'une poche ostréicole).

### Table ostréicole

De manière plus précise, l'objet de la présente invention (appliquée à l'ostréiculture) concerne une table ostréicole comprenant un dispositif de fixation et de positionnement d'un support de croissance de coquillages (support ostréicole), telle que définie ci-dessus. L'objet de la présente invention concerne ainsi une table ostréicole comprenant un moyen de fixation et de positionnement d'un support de croissance (telle qu'une poche) ostréicole, caractérisé en ce que ledit moyen de fixation et de positionnement permet de faire subir un flux d'eau turbulent (par exemple turbulent lisse ou rugueux) ou de transition audits supports de croissances. De manière préférée, la table ostréicole comprend une portion placée horizontalement au-dessus de la table ostréicole, et ledit support ostréicole est attaché à ladite portion horizontale. Le plan horizontal de la table ostréicole est le plan sur lequel sont classiquement posés les poches ostréicoles dans l'art antérieur. Ainsi, le plan horizontal de la table ostréicole est sensiblement confondu avec le plan horizontal terrestre.

Afin d'augmenter le rendement de production, la table ostréicole selon la présente invention est configurée de manière à ce que le plan médian du support de croissance ostréicole a un angle d'inclinaison par rapport au plan horizontal compris entre 0 et 30°, préférentiellement entre 10 et 20° et pouvant optionnellement varier dans ces gammes. De manière plus précise, l'angle d'inclinaison est compris entre 1 et 28°, entre 10 et 27°, préférentiellement entre 15 et 25°, tel que 15° +/- 1°, 16° +/- 1°, 17° +/- 1°, 18° +/- 1°, 19° +/- 1°, 20° +/- 1°, 21° +/- 1°, 22° +/- 1°, 23° +/- 1°, 24° +/- 1°, ou encore 25° +/- 1° par rapport au flux d'eau (pouvant donc être sensiblement équivalent à l'horizontal)

L'objet de la présente invention concerne également une table ostréicole telle que définie ci-dessus, caractérisée en ce que le moyen de fixation et positionnement est un support horizontal et/ou un arceau comprenant une section de support horizontal fixe. De manière avantageuse, la table ostréicole selon la présente invention est caractérisée en ce que le moyen de fixation et positionnement (telle qu'un support horizontal et/ou un arceau) comprend une partie métallique et/ou une partie en polymère organique adapté au milieu marin, tel que du PVC. En particulier, ce polymère permet l'adaptabilité à toute largeur de table. Il est notamment intéressant de pouvoir utiliser dans ce contexte tout type de métal suffisamment rigide pour une table pré-équipée.

De manière avantageuse, la table ostréicole selon la présente invention est caractérisée en ce que le moyen de fixation et positionnement, tel qu'un support horizontal et/ou un arceau, est attaché à ladite table par soudure ou par un lien élastomère. Par exemple, cela peut se faire par le biais d'une bande de caoutchouc enroulée autour des parties en contact les unes avec les autres de la table et dudit moyen de fixation. L'avantage d'un tel mode de réalisation lorsque ledit moyen de fixation (tel qu'un arceau) et la table sont en métal oxydable (tel que l'acier), est que la corrosion se développant sur site aide à les souder ensemble. Il peut alors être fait référence à l'ensemble comme une table ostréicole comprenant un arceau tel que définit présentement. Dans un mode de réalisation particulier, lorsque ledit moyen de fixation est un arceau, la table ostréicole selon la présente invention peut être caractérisée en ce que les parties de l'arceau en contact avec la table sont deux tubes antiparallèles reliés par l'arceau. De manière préférée, les tubes antiparallèles peuvent être sensiblement perpendiculaires par rapport au plan défini par l'arceau.

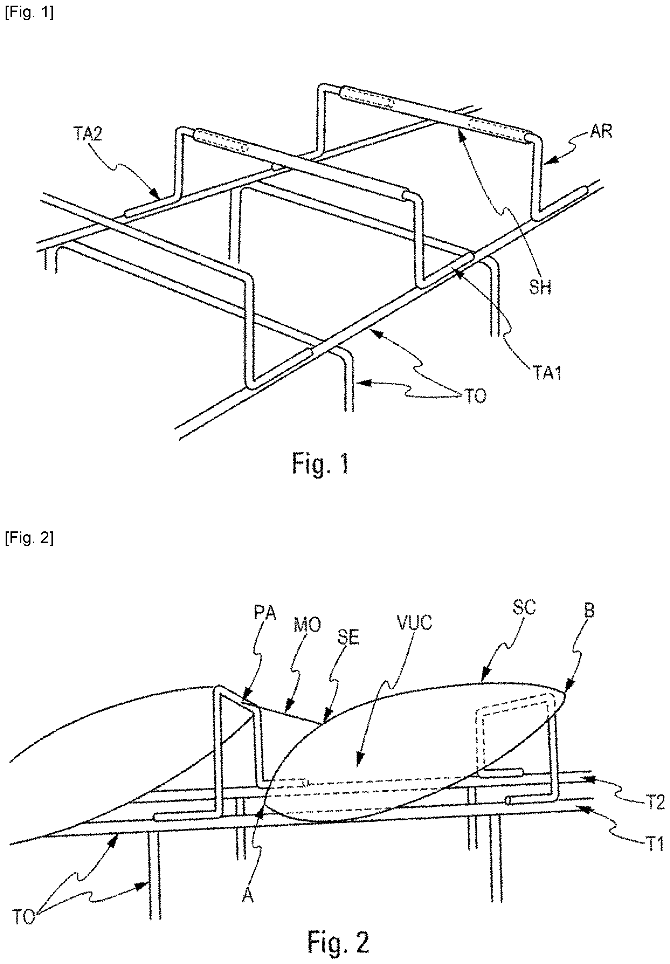

Dans un mode de réalisation particulier, la table ostréicole selon la présente invention peut être caractérisée en ce que ladite table comprend au moins deux moyens de fixation et de positionnement, tels que des arceaux. L'un des avantages d'un tel mode de réalisation est la possibilité d'utiliser un premier arceau pour fixer et positionner le support de croissance et d'utiliser le second arceau pour ajouter un moyen d'ouverture du support de croissance lorsque celui-ci est souple (cf. figure 2).

De la même manière que pour le dispositif selon la présente invention, dans un mode de réalisation particulier, la table ostréicole selon la présente invention peut être caractérisée en ce que le support de croissance ostréicole est creux, telle qu'une poche ostréicole. Ainsi, la table ostréicole selon la présente invention peut être caractérisée en ce que le support de croissance ostréicole creux (et flexible et/ou souple) est maintenu en position ouverte par un moyen d'ouverture, de la même manière que pour le dispositif ci-dessus, et ainsi, le moyen d'ouverture peut comprendre au moins une partie élastique comme expliqué ci-dessus. De la même manière que pour le dispositif selon l'invention, la table ostréicole selon l'invention peut être caractérisé en ce que le moyen d'ouverture est attaché à une surface extérieure du support de croissance ostréicole creux et avantageusement attaché d'autre part à un moyen de fixation supplémentaire, tel qu'un arceau.

### Arceau

L'objet de la présente invention concerne donc un support adapté pour une mise en œuvre du dispositif et/ou de la table ostréicole tels que présentés ici. Ainsi, un objet de l'invention concerne plus particulièrement un arceau adapté pour une table ostréicole et/ou un dispositif tels que présentés ci-dessus. Avantageusement l'arceau est fabriqué en tubes par exemple métalliques (tel que de l'acier) et/ou en polymères plastiques (tel que le PVC) suffisamment robustes pour la mise en œuvre selon l'invention. Les tubes peuvent être reliés entre eux par des moyens de jonctions qui peuvent être métalliques et/ou polymériques. La structure de l'arceau selon la présente invention est tel que défini ci-dessus. Ainsi l'arceau selon la présente invention comprend une section permettant d'attacher (de manière mobile ou fixe) les supports de croissances tels que définis ci-dessus. De manière préférée, l'arceau comprend au moins une section rectiligne permettant d'attacher (de manière mobile ou fixe) les supports de croissances tels que définis ci-dessus.

L'arceau peut aussi comprendre deux tubes antiparallèles à ses deux extrémités adaptées pour être attachés à une table ostréicole. De manière préférée, les tubes antiparallèles peuvent être sensiblement perpendiculaires par rapport au plan défini par l'arceau. Alternativement, les tubes antiparallèles peuvent être inclinés afin par exemple à un angle égal ou supérieur à 30° (et l'angle complémentaire de 150° ou inférieur) par rapport au plan défini par l'arceau, afin d'incliner l'arceau sur l'installation et ainsi gérer par exemple la compacité de l'installation. Les arceaux peuvent également alors être mieux placés au-dessus des supports de croissances pour fournir un moyen d'ouverture de celles-ci.

En outre, afin de faire varier l'angle d'inclinaison du support de croissance ostréicole, l'arceau peut comprendre un moyen supplémentaire de variation de sa hauteur totale une fois positionné par exemple sur une table ostréicole. Par exemple, si l'arceau comprend deux tubes rectilignes, l'arceau peut alors comprendre des systèmes de tubes incérés les uns dans les autres pour simplement augmenter ou diminuer la hauteur de l'ensemble par glissement-fixation.

### Procédé de culture de coquillages

L'objet de la présente invention concerne un procédé de culture de coquillages comprenant un dispositif selon l'invention et/ou une table ostréicole selon l'invention. Le procédé peut ainsi comprendre les étapes suivantes :
(i) introduction post-nurserie de coquillages dans des supports de croissance,
(ii) installation des supports de croissance ensemencés selon l'étape (i) sur un dispositif de fixation et de positionnement selon la présente invention et/ou une table ostréicole selon la présente invention,
(iii) mise en culture en milieu naturel de l'ensemble,
(iv) retournement optionnel des supports de croissance,
(v) mise en position de repos optionnelle des supports de croissance, et
(vi) récolte des coquillages.

De manière avantageuse, le procédé est utilisé pour les coquillages (e.g. huitres) en tout début d'élevage à l'extérieur (c'est-à-dire au moment de la transition « naissain » vers « prégros »). Ainsi le naissain placé dans ledit support peut se retrouver dans un espace libre (par exemple le concave du bas de la poche ostréicole, qui peut d'ailleurs être généré naturellement par le poids des coquillages) où le flux d'eau généré par l'eau, en particulier par la succession de supports inclinés alignés dans le sens du courant selon la présente invention, et le clapot, amène une situation proche de celle existant en nurserie. L'étape (iii) peut simplement consister à laisser le dispositif de fixation et de positionnement selon la présente invention et/ou une table ostréicole selon la présente invention subir les mouvements d'eau naturels, comme les mouvements des marées.

Le procédé selon la présente invention peut être en outre caractérisé en ce que le dispositif et/ou la table ostréicole est orientée dans le milieu naturel de manière à générer un flux d'eau turbulent (par exemple turbulent lisse ou rugueux) ou de transition à au moins une étape du procédé de culture.

Le procédé selon la présente invention peut être également caractérisé en ce qu'un moyen d'ouverture selon la présente invention est appliqué au dispositif et/ou la table ostréicole de manière à ouvrir le support de croissance, tel qu'expliqué ci-dessus.

### Utilisation pour une culture ostréicole

L'objet de la présente invention concerne également de manière générale une utilisation d'un dispositif selon la présente invention et/ou une table ostréicole selon la présente invention pour une culture de coquillages, telle que la culture ostréicole.

### FIGURES

[Fig.1] La figure 1 représente une table ostréicole (TO) selon la présente invention comprenant un support horizontal prenant la forme d'un arceau (AR) comprenant une section de support horizontal fixe (SH). Dans le mode réalisation représenté ici, la table ostréicole est caractérisée en ce que les parties de l'arceau en contact avec la table sont deux tubes antiparallèles (TA1, TA2) reliés par l'arceau. Dans le mode réalisation représenté ici, les tubes antiparallèles (TA1, TA2) sont sensiblement perpendiculaires par rapport au plan défini par l'arceau. Les tubes antiparallèles (TA1, TA2) peuvent être reliés à la table ostréicole (TO) par soudure ou par l'utilisation d'un lien élastomère, telle qu'une bande de caoutchouc enroulée autour des parties en contact les unes avec les autres de la table et de l'arceau. De manière avantageuse, il a été remarqué dans une telle configuration que lorsque les tubes en contact les uns avec les autres sont en acier oxydable, la corrosion générée permet d'augmenter l'adhésion des tubes les uns avec les autres. Le lien élastomère présente ainsi un avantage surprenant par rapport à une soudure classique, qui est rongée par la corrosion. Une fois mis en place sur site de culture, la partie de l'arceau qui n'est pas en contact avec la table ostréicole est ici quasiment vertical ou sensiblement compris dans une gamme d'angles de 90° plus ou moins 15° par rapport à la verticale, selon la pente du site de culture. Dans un mode de réalisation représenté ici, l'arceau est composé de différents section qui peuvent être de manière générale en des matériaux identiques ou différents. Par exemple, les tubes antiparallèles (TA1, TA2) peuvent être en un métal ou un alliage de métaux, tel que l'acier. Par contraste, le matériau de la section de support horizontal fixe (SH) peut être en métal ou alliage de métaux (tel que l'acier), ou en un polymère tel qu'un polymère plastique (par exemple le PVC). L'arceau peut également être fait d'une seule pièce comme représenté sur l'arceau de gauche sur la figure 1.
[Fig.2] La figure 2 représente une table ostréicole (TO) selon la présente invention comprenant un support horizontal selon la figure 1 vue de côté avec un support de culture de coquillage (SC) pouvant être une poche ostréicole comprenant un volume utile de culture (VUC), fixé et positionné de manière à générer un flux d'eau turbulent (par exemple turbulent lisse ou rugueux) ou de transition une fois sur site. Ici, l'arceau rentre dans le support de culture pour le fixer et le support de culture repose sur la table ostréicole (le support de culture peut être attachée à celle-ci). Il peut être constaté que l'angle d'inclinaison du support de culture est de 20°, mesuré ici au niveau du plan médian du support passant au niveau des points (ou lignes en trois dimensions) (A) et (B) et le plan défini par les tubes (T1, T2) du plateau horizontal de la table ostréicole. Dans le mode réalisation représenté ici, un moyen d'ouverture (MO) est attaché d'une part à une surface extérieure (SE) dudit support creux et souple et attaché d'autre part à un point d'ancrage (PA) extérieur dudit dispositif.

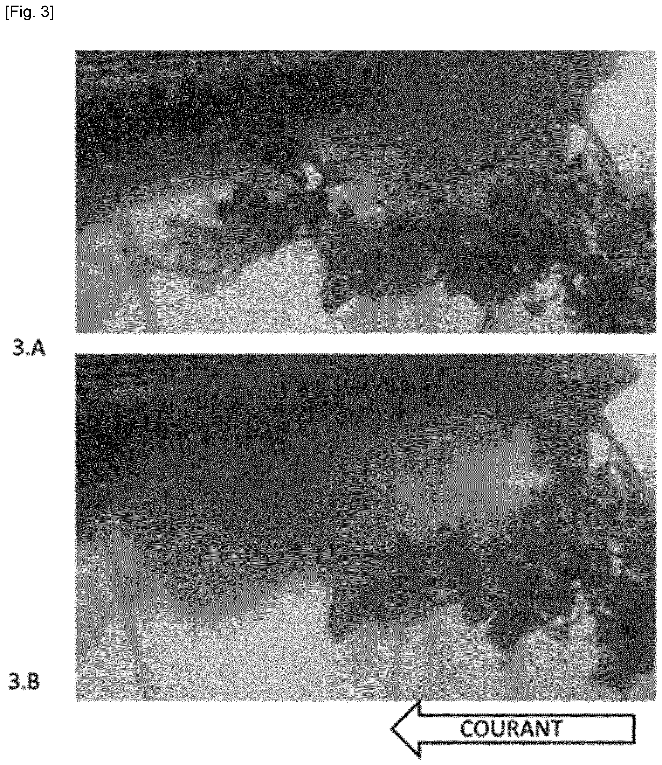

[Fig.3] Les figures 3A et 3B sont des photographies extraites d'un film dans lequel un colorant alimentaire (issu de betterave ici) a été placé en amont de poches ostréicoles, et laissé dériver avec le courant. L'image de la figure 3B est postérieure à celle de la figure 3A. Il a ainsi été constaté d'une part que les poches ostréicoles influençaient nettement la trajectoire du colorant en le forçant vers le bas (même si les deux flux existent) selon le sens du courant. Ceci révèle qu'une dépression est alors générée du côté opposé de la poche. Il a été constaté que le colorant passe au travers de la poche ostréicole. D'autre part, il a été constaté (non représenté ici) que des particules colorées présentent des mouvements de retour à contre-courant, décrivant ainsi des trajectoires en forme de boucle de type « looping », surtout sur la face supérieure de la poche dans la configuration / mode de réalisation telle que représentée dans la figure 3. Ceci corrobore la théorie à la base de la présente invention en ce qui concerne la mécanique des fluides de type de flux turbulent (par exemple turbulent lisse ou rugueux) ou de flux de transition s'opérant au niveau des poches ostréicoles positionnées dans des configurations particulières.

### EXEMPLES

### Exemple 1 : Application à l'ostréiculture, étude comparative.

Cet essai a été mis en œuvre sur un site privé isolé dans le Finistère (France) entre le mois de mars et le mois d'octobre. Dix poches ostréicoles (50cm de large pour 1 mètre de long) soudées et plates de maillage 4mm ont été ensemencées avec 500 huitres (ici de l'espèce *Crassostrea gigas*) obtenues post-nurserie (âgées de 6 mois). Le montage ayant été utilisé est identique à celui représenté dans les figures 1 et 2 (hauteur de l'arceau vertical (AR) : 17 cm par rapport à la table). Les poches ont été retournées tous les 15 jours au grès des marées par rotation autour de l'axe B dans la figure 2. De manière comparative, des poches identiques ont été placées classiquement sur une table ostréicole sans les arceaux (AR) et sans les moyens d'ouverture (MO), et manipulées classiquement. Ainsi, dans les poches selon l'état de la technique (placées à plat), il est typiquement constaté que les huitres s'agglutinent dans les coins, nécessitant une manutention lourde pour les libérer et éviter une perte de rendement. De manière surprenante, lorsque le bord d'attaque (A - selon la représentation de la figure 2) dans la mise en œuvre selon la présente invention fait face au courant, les huitres ne s'agglutinent nettement moins, voire pas, dans les coins de la poche et croissent librement dans l'espace dédié. Ceci a permis une augmentation du rendement de traitement (retournement des poches). En effet au lieu de passer 30 secondes à une minutes par poche le manutentionnaire ne passe plus que 3 à 10 secondes seulement par poche (les huitres n'étant pas dans les coins). De plus, lors de la récolte en Octobre un gain de rendement de 17 % en masse d'huitres a été constaté sur le même nombre de poches. Cet écart de rendement ne peut s'expliquer uniquement par les pertes dues à l'agglutination dans les coins. L'hypothèse soulevée à ce moment a été que cet effet peut également s'expliquer par une meilleure oxygénation et apport en nutriment dans la mise en œuvre selon la présente invention.

### Exemple 2 : Confirmation des différences de flux d'eau

Lors d'un second test avec la même mise en œuvre selon la présente invention de l'Exemple 1, des tests de coloration ont été menés pour comprendre les phénomènes de dynamique des fluides impliqués. Il est ressorti de manière surprenante que les poches placées selon la figure 2 généraient des mouvements de flux de nature turbulente (par exemple turbulente lisse ou rugueux) ou de transition selon la force du courant. Ce test de coloration a révélé que lorsque le courant passe d'abord par B puis A (selon la figure 2), l'eau située sur le dessus de la poche plonge d'abord vers le bas en traversant la poche puis semble remonter par la dépression créée. Ainsi un mouvement de haut en bas de l'eau au fur et à mesure que le courant avance a été constaté. Des particules colorées passant sur la poche ont confirmé cet effet (particules soulevées et plaquées). Lorsque le courant est inversé (d'abord passant par A puis par B selon la figure 2), l'effet dynamique a été toutefois plus difficile à constater dû à des simples questions techniques (plus profond ; moins bonne visibilité), mais la coloration semble indiquer que le même type de phénomène (en commençant par une remontée de l'eau, puis une plonge de l'eau) est reproduit.

### Exemple 3 : confirmation supplémentaire d'un effet dynamique de l'eau

Lors d'un troisième test avec la même mise en œuvre selon la présente invention de l'Exemple 1, mais où une poche n'a subi aucune manipulation, il a été constaté de manière très surprenante que les huitres se sont accumulées sur la surface de la paroi inférieure sous la forme d'un bouquet d'huitres évoquant la forme d'un choux fleur vu par le dessus. Ce résultat est d'autant plus surprenant que l'on aurait pu s'attendre à ce que les huitres s'accumulent dans le coin bas inférieur lors du reflux du courant. Or, ce n'est pas le cas. De plus, toutes les huitres avaient un aspect similaire les unes aux autres, ce qui implique qu'elles ont puisées de manière similaire les unes aux autres l'oxygène et les nutriments dans leur environnement. Comparativement, si une poche ostréicole classique est laissées ainsi sans manipulation, les huitres s'accumulent dans les coins et sont de tailles très différentes les unes des autres, ce qui implique qu'elles ne puisent pas toutes les nutriments/oxygène dans le milieu. En effet, même si la configuration spatiale est contrainte autour d'une huitre, celle-ci continue de croitre vers l'espace libre (même dans et autour du maillage). Or, ici les différences de tailles constatées indiquent que les animaux ne bénéficient pas des mêmes conditions de nutrition et d'oxygénation, ce qui n'est pas le cas de la présente invention.

### Conclusions des exemples 1, 2 et 3 :

La présente invention permet différents effets techniques en particulier selon le sens du courant, mais permet de manière générale d'augmenter le rendement de production :
1) lorsque le courant touche d'abord le point bas (A) (selon la figure 2) de la poche, le courant empêche les huitres de s'agglutiner dans ce point (A) et leur permet de se positionner dans l'espace de croissance dédié, et comme le point B est placé plus haut, les huitres sont contraintes à rester dans ce volume utile de la poche. Ceci permet d'accroitre le rendement de manipulation/retournement des poches et assure une moindre agglutination des coquillages dans les coins ;
2) L'inclinaison de la poche et donc du support de croissance permet la génération de turbulences dans le flux d'eau soumis. Cet effet permet une meilleure oxygénation et alimentation de l'ensemble des huitres, ce qui se traduit par une récolte plus homogène et donc un meilleur rendement de production.

## Revendications

1. Dispositif de fixation et de positionnement, préférentiellement pour le milieu extérieur, d'au moins un support de croissance (SC) de coquillages post-nurserie, par exemple un support de croissance ostréicole, **caractérisé en ce que** :
- ledit dispositif est configuré de manière à ce qu'une majorité desdits coquillages subit un flux d'eau turbulent ou de transition, préférentiellement un flux d'eau turbulent lisse ou rugueux, et/ou
- ledit dispositif est configuré de manière à ce que le support de croissance comprend un point bas (A) arrangé de manière à faire face au courant, un point haut fuyant (B) et un volume utile de croissance (VUC) à l'aval du point bas (A).

2. Dispositif selon la revendication 1, **caractérisé en ce que** ledit dispositif de fixation et de positionnement est statique, tel qu'un support horizontal et/ou un arceau comprenant une section de support horizontal fixe.

3. Dispositif selon la revendication 1 ou 2, **caractérisé en ce qu'**il est configuré pour que le support de croissance a un mode de positionnement statique et/ou un mode de positionnement mobile, préférentiellement mobile selon au moins un axe de rotation, par exemple configuré pour que le support de croissance est attaché de manière à ce que le plan médian de celui-ci a un angle d'inclinaison par rapport à l'horizontal supérieur à 0°, par exemple compris entre 0 et 30°, préférentiellement entre 10 et 20° et peut optionnellement varier dans ces gammes.

4. Dispositif selon l'une quelconque des revendications précédentes, **caractérisé en ce que** ledit dispositif comprend en outre une position de repos dans lequel le support de croissance est placé de manière à ce que le flux d'eau n'est pas turbulent ou de transition, par exemple le support de coquillages est attaché de manière à ce que le plan médian de celui-ci est horizontal.

5. Dispositif de fixation et de positionnement d'au moins un support souple et creux de croissance de coquillages, **caractérisé en ce que** ledit dispositif comprend un moyen d'ouverture attaché d'une part à une surface extérieure dudit support creux et souple et attaché d'autre part à un point d'ancrage fixe par rapport audit dispositif, optionnellement ledit dispositif est configuré de manière à ce que ledit support de croissance subit un flux d'eau turbulent ou de transition tel que défini dans l'une quelconque des revendications 1 à 4.

6. Dispositif selon la revendication 5, **caractérisé en ce que** le point d'ancrage extérieur fixe est un support horizontal et/ou un arceau supplémentaire tel que défini dans la revendication 2.

7. Dispositif selon l'une quelconque des revendications précédentes, **caractérisé en ce que** ledit dispositif est configuré pour que le support de croissance a un mode de fonctionnement statique et/ou un mode de fonctionnement mobile dans lequel les mouvements des supports de croissance n'excèdent pas 20% de la plus grand taille rectiligne du plan médian du support de croissance.

8. Dispositif selon l'une quelconque des revendications précédentes, **caractérisé en ce que** ledit dispositif est relié au sol par un support fixe.

9. Dispositif selon l'une quelconque des revendications précédentes, **caractérisé en ce que** ledit dispositif a une densité supérieure ou égale à 1.

10. Dispositif selon l'une quelconque des revendications précédentes, **caractérisé en ce qu'**il ne comprend pas de flotteur.

11. Table ostréicole configurée pour comprendre un dispositif selon l'une quelconque des revendications 1 à 10, tel qu'un arceau attaché à ladite table par soudure ou par un lien élastomère, telle qu'une bande de caoutchouc enroulée autour des parties en contact les unes avec les autres de la table et de l'arceau.

12. Table ostréicole selon la revendication 11 **caractérisée en ce que** les éléments du dispositif soient incorporés dans les éléments de ladite table, par exemple par une moulure ou un pliage d'une seule pièce.

13. Arceau adapté pour un dispositif selon l'une quelconque des revendications 1 à 10 ou une table ostréicole selon la revendication 10 ou 11.

14. Procédé de culture de coquillages comprenant un dispositif selon l'une quelconque des revendications 1 à 10 et/ou une table ostréicole selon la revendication 10 ou 11, ledit dispositif et/ou ladite table ostréicole étant orientés dans un milieu naturel de manière à générer un flux d'eau turbulent ou de transition.

15. Utilisation d'un dispositif selon l'une quelconque des revendications 1 à 10, une table ostréicole selon la revendication 10 ou 11 et/ou un arceau selon la revendication 13 pour une culture de coquillages.
